(19) Europäisches Patentamt
European Patent Office
Office européen des brevets

(11) EP 3 627 586 B1

(12) **EUROPEAN PATENT SPECIFICATION**

(45) Date of publication and mention of the grant of the patent:
**28.09.2022 Bulletin 2022/39**

(21) Application number: **18801779.2**

(22) Date of filing: **16.05.2018**

(51) International Patent Classification (IPC):
***H01M 50/426*** *(2021.01)* ***H01M 50/409*** *(2021.01)*
***H01M 50/491*** *(2021.01)* ***H01M 10/0525*** *(2010.01)*
***H01M 50/431*** *(2021.01)* ***H01M 50/443*** *(2021.01)*
***H01M 50/46*** *(2021.01)* ***H01M 10/0585*** *(2010.01)*

(52) Cooperative Patent Classification (CPC):
**H01M 50/426; H01M 10/0525; H01M 10/0585; H01M 50/409; H01M 50/431; H01M 50/443; H01M 50/461; H01M 50/491;** Y02E 60/10; Y02P 70/50

(86) International application number:
**PCT/JP2018/018986**

(87) International publication number:
**WO 2018/212252 (22.11.2018 Gazette 2018/47)**

(54) **SEPARATOR FOR NON-AQUEOUS SECONDARY BATTERIES, NON-AQUEOUS SECONDARY BATTERY, AND METHOD FOR PRODUCING NON-AQUEOUS SECONDARY BATTERY**

SEPARATOR FÜR NICHTWÄSSRIGE SEKUNDÄRBATTERIEN, NICHTWÄSSRIGE SEKUNDÄRBATTERIE UND VERFAHREN ZUR HERSTELLUNG EINER NICHTWÄSSRIGEN SEKUNDÄRBATTERIE

SÉPARATEUR POUR BATTERIES SECONDAIRES NON AQUEUSES, BATTERIE SECONDAIRE NON AQUEUSE, ET PROCÉDÉ DE PRODUCTION DE BATTERIE SECONDAIRE NON AQUEUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2017 JP 2017098000**

(43) Date of publication of application:
**25.03.2020 Bulletin 2020/13**

(73) Proprietor: **Teijin Limited**
**Osaka-shi, Osaka 530-0005 (JP)**

(72) Inventor: **SATO, Megumi**
**Osaka-shi**
**Osaka 530-0005 (JP)**

(74) Representative: **Carpmaels & Ransford LLP**
**One Southampton Row**
**London WC1B 5HA (GB)**

(56) References cited:
**EP-A1- 3 168 900** **EP-A1- 3 376 562**
**WO-A1-2013/058369** **WO-A1-2016/093146**
**WO-A1-2016/152863** **WO-A1-2017/002947**
**WO-A1-2017/026485** **JP-A- 2002 216 734**
**JP-A- 2003 163 033** **JP-A- 2014 520 378**
**JP-A- 2016 111 001** **US-A1- 2014 120 269**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present disclosure relates to a separator for a non-aqueous secondary battery, a non-aqueous secondary battery and a method for producing a non-aqueous secondary battery.

Background Art

Non-aqueous secondary batteries represented by lithium ion secondary batteries are widely used as power sources for portable electronic devices such as notebook-size personal computers, mobile phones, digital cameras and camcorders. Outer package of non-aqueous secondary batteries has been lightened with size reduction and weight reduction of portable electronic devices, and as outer packaging materials, aluminum cans have been developed in place of stainless cans, and further, aluminum laminated film packages have been developed in place of metallic cans. However, an aluminum laminated film package is soft, and therefore in a battery having the package as an outer packaging material (a so called soft package battery), a gap is easily formed between an electrode and a separator due to external impact, or electrode expansion and shrinkage associated with charge-discharge, so that the cycle life of the battery may be reduced.

In order to solve the above problems, a technique to increase adhesion between an electrode and a separator has been suggested. As one of the techniques, a separator having an adhesive porous layer containing a polyvinylidene fluoride type resin (hereinafter, also referred to as PVDF type resin) on porous substrate such as a polyolefin microporous film is known (for example, Japanese patent No. 5837437, and Japanese patent No. 5670811). When this separator is superimposed and thermally pressed on an electrode with an electrolyte solution included therein (hereinafter, also referred to as "wet heat press"), the entire of the separator is well adhered to the electrode through the adhesive porous layer, thereby improving the cycle life of a soft pack battery. EP3376562A1 relates to a separator for a non-aqueous secondary battery and a non-aqueous secondary battery. WO2016/093146A1 relates to a separator for a secondary battery, a method for manufacturing a separator for a secondary battery, and a secondary battery. US2014/120269A1 relates to o a process for manufacturing components for use in secondary batteries. More particularly, the present invention pertains to a process for manufacturing electrodes and/or separators for use in secondary batteries.

SUMMARY OF INVENTION

Technical Problem

Meanwhile, PVDF type resins have high crystallinity. Accordingly, to secure sufficient adhesion to electrodes, it is necessary to carry out hot-press in stringent conditions, for instance, at a high temperature of 90°C or more and under increased pressure. Specifically, in conventional technologies such as Japanese Patent Nos. 5837437 and 5670811, wet heat press is carried out in conditions at a temperature of 90°C and a pressure of 20 kgf/$cm^2$ (= about 2 MPa).

However, when wet heat press is carried out under such stringent conditions, the porous structure of a porous layer in a separator has sometimes been damaged. This may decrease ion permeability in a heat-pressed separator. Unfortunately, it has thus been sometimes difficult to obtain favorable load characteristics. Hence, separators are desired that can be suitably bonded even under hot-press conditions at a relatively low temperature of less than 90°C.

Here, an embodiment of the present invention addresses the problem of providing a separator for a non-aqueous secondary battery such that the separator is excellent in adhesion to an electrode(s) in the case of performing wet heat press under mild conditions and can secure superior ion permeability after bonded to an electrode(s) when compared with conventional separators.

In addition, another embodiment of the invention addresses the problem of providing a non-aqueous secondary battery having excellent cell strength and battery properties.

Solution to Problem

The invention is defined by the appended claims. The specific solutions to the problem include the following embodiments:

[1] A separator for a non-aqueous secondary battery, containing:

a porous substrate; and
an adhesive porous layer that is provided on one side or both sides of the porous substrate, and that contains

a polyvinylidene fluoride type resin,

wherein the polyvinylidene fluoride type resin contains a copolymer A having a melting point of from 130°C to 148°C, and contains, as monomer components, vinylidene fluoride and a monomer represented by the following Formula (1):

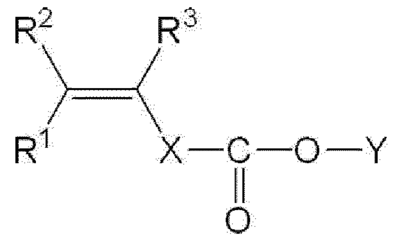

(1)

wherein, in Formula (1), each of $R^1$, $R^2$, and $R^3$ independently represents a hydrogen atom, a halogen atom, a carboxyl group or a derivative thereof, or a $C_{1-5}$ alkyl group; X represents a single bond, a $C_{1-5}$ alkylene group, or a substituted $C_{1-5}$ alkylene group; and Y represents a hydrogen atom, a $C_{1-5}$ alkyl group, or a $C_{1-5}$ alkyl group that contains at least one hydroxy group.

[2] The separator for a non-aqueous secondary battery according to [1], wherein the copolymer A has a weight-average molecular weight of from 300,000 to 3,000,000.

[3] The separator for a non-aqueous secondary battery according to [1], wherein the copolymer A has a weight-average molecular weight of less than 300,000;

the polyvinylidene fluoride type resin further comprises a polyvinylidene fluoride type resin B that is other than the copolymer A and has a weight-average molecular weight of 300,000 or more; and

a middle point between a melting point of the copolymer A and a melting point of the polyvinylidene fluoride type resin B is 155°C or lower.

[4] The separator for a non-aqueous secondary battery according to any one of [1] to [3], wherein the adhesive porous layer further comprises an inorganic filler.

[5] The separator for a non-aqueous secondary battery according to any one of [1] to [4], wherein the copolymer A comprises, as a monomer component, 0.5 mol% or more of the monomer represented by Formula (1).

[6] The separator for a non-aqueous secondary battery according to any one of [1] to [5], wherein the copolymer A further comprises hexafluoropropylene as a monomer component.

[7] A non-aqueous secondary battery that obtains electromotive force by lithium doping and dedoping, the battery containing:

a positive electrode;

a negative electrode; and

the separator for a non-aqueous secondary battery according to any one of [1] to [6], the separator being disposed between the positive electrode and the negative electrode.

[8] A method of manufacturing a non-aqueous secondary battery, the method containing:

disposing, between a positive electrode and a negative electrode, the separator for a non-aqueous secondary battery according to any one of [1] to [6] to produce a layered body;

housing the layered body inside an exterior material, injecting an electrolyte solution into an inside of the exterior material, and then sealing the exterior material to produce a battery element; and

subjecting the battery element to heat pressing at a temperature of from 65°C to 75°C to bond the separator for a non-aqueous secondary battery to the positive electrode, the negative electrode, or a combination thereof.

Advantageous Effects of Invention

An embodiment of the invention can provide a separator for a non-aqueous secondary battery such that the separator is excellent in adhesion to an electrode(s) in the case of performing wet heat press under mild conditions and can secure superior ion permeability after bonded to an electrode(s) when compared with conventional separators.

Another embodiment of the invention can provide a non-aqueous secondary battery having excellent cell strength and battery properties.

DESCRIPTION OF EMBODIMENTS

Hereinafter, the embodiments will be described. Further, the description and the Examples thereof illustrate the embodiments, but do not limit the scope of the embodiments.

In the present application, the numerical range denoted by using "to" represents the range inclusive of the number written before and after "to" as the minimum and maximum values. Regarding stepwise numerical ranges designated in the present disclosure, an upper or lower limit set forth in a certain numerical range may be replaced by an upper or lower limit of another stepwise numerical range described. Besides, an upper or lower limit set forth in a certain numerical range of the numerical ranges designated in the disclosure may be replaced by a value indicated in Examples.

In the present application, the term "process" includes not only an independent process, but also the process which is not clearly distinguished from other processes but achieves the desired purpose thereof.

As used herein, the "monomer component" of resin refers to a structural component of resin and means a constitutional unit formed after a monomer is subjected to a polymerization reaction.

<Separator for Non-aqueous Secondary Battery>

The separator for a non-aqueous secondary battery of the present disclosure (also referred to as simply "separator") includes a porous substrate; and an adhesive porous layer that is provided on one side or both sides of the porous substrate. In a separator of the disclosure, the adhesive porous layer includes copolymer A (a polyvinylidene fluoride type resin; PVDF type resin A) having a melting point of from 130°C to 148°C, and comprising, as monomer components, vinylidene fluoride and a monomer represented by the following Formula (1):

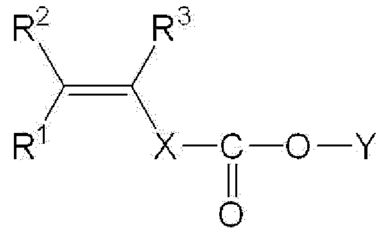

(1)

In Formula (1), each of $R^1$, $R^2$, and $R^3$ independently represents a hydrogen atom, a halogen atom, a carboxyl group or a derivative thereof, or a $C_{1-5}$ alkyl group; X represents a single bond, a $C_{1-5}$ alkylene group, or a substituted $C_{1-5}$ alkylene group; and Y represents a hydrogen atom, a $C_{1-5}$ alkyl group, or a $C_{1-5}$ alkyl group that contains at least one hydroxy group.

Hereinafter, vinylidene fluoride or its monomer component is sometimes referred to as "VDF". Hexafluoropropylene or its monomer component is sometimes referred to as "HFP". Then, a monomer represented by Formula (1) or its monomer component is sometimes referred to as a "functional group-containing monomer".

A separator of the disclosure is provided with an adhesive porous layer including PVDF type resin A having a particular melting point and a particular structure, so that the separator excels in wet heat press-mediated adhesion to an electrode(s) (hereinafter, also referred to as "wet adhesion").

Generally speaking, in PVDF type resins, as the percentage of a copolymer component such as HFP increases, the crystallinity deteriorates more. As a result, the fluidity during high-temperature heating is increased and the melting point is lowered. In addition, the swelling in an electrolyte solution is also increased. Accordingly, selection of a copolymer having a particular melting point or lower makes it easy to bond under mild conditions.

However, if an adhesive porous layer is formed using a PVDF type resin having a low melting point and low crystallinity, the porosity is likely to increase and the pore diameter is also likely to become larger. When the adhesive porous layer has a high porosity and a large pore diameter, the area of PVDF type resin portion, where an electrode is bonded, on a surface of the adhesive porous layer decreases and the PVDF type resin is present sparsely. Consequently, the bonding between the adhesive porous layer and the electrode tends to be weakened. In addition, when the adhesive porous layer has a high porosity and a large pore diameter, the ionic migration at an electrode interface is uneven. This causes harmful effects on the cycle characteristics and load characteristics of a battery.

Further, when the PVDF type resin has too low crystallinity, namely, when the PVDF type resin has a particular melting point or less, the swelling in an electrolyte solution is too high, thereby closing fine pores. This prevents ions from migrating and as a result of which the cycle characteristics and/or the load characteristics tend to be lowered.

Thus, to achieve both the battery properties and expression of wet adhesion under mild conditions, it is of course important to include a PVDF type resin having a specific range of melting point. Further, it is also important to

appropriately control the porous structure and the swelling in an electrolyte solution, thereby enhancing affinity for electrode material. Here, the disclosure provides a solution to these problems by including, in an adhesive porous layer, copolymer A (PVDF type resin A) having a melting point of from 130°C to 148°C, and comprising, as monomer components, vinylidene fluoride and a monomer represented by Formula (1). Such a separator of the disclosure excels in adhesion to an electrode(s) in the case of performing wet heat press under mild conditions, thereby eliciting superior ion permeability after heat press. In addition, a separator of the disclosure excels in wet adhesion not only to an electrode(s) using a solvent-based binder (e.g., a PVDF type resin) but also to an electrode(s) using an aqueous binder (e.g., a styrene-butadiene copolymer).

A separator of the disclosure excels in adhesion to an electrode(s), so that a non-aqueous secondary battery using the separator of the disclosure has excellent cell strength. Further, a separator of the disclosure is advantageously bonded to an electrode(s) even after wet heat press under relatively mild conditions. Accordingly, the favorable porous structure after the heat press is maintained. As a result, a non-aqueous secondary battery using the separator of the disclosure has excellent electrode properties such as cycle characteristics and load characteristics. Furthermore, because the temperature during wet heat press can be set to a relatively low temperature, gas generation caused by decomposition of an electrolyte solution and an electrolyte is suppressed and the problem of battery gas swelling is thus hard to occur.

Moreover, in a separator of the disclosure, electrode expansion and shrinkage accompanied by charge and discharge as well as formation of a gap between an electrode and a separator by an external impact are suppressed. Hence, the separator of the disclosure fits for soft pack batteries using an aluminum laminated film-made package as an exterior material. The separator of the disclosure provides a soft pack battery having increased battery performance.

The following describes, in detail, materials, compositions, physical properties, and others of a separator of the disclosure.

[Porous Substrate]

The porous substrate in the present disclosure refers to a substrate having pores or voids therein. As the substrate, a microporous film; a porous sheet such as non-woven fabric and paper, composed of a fibrous material; a composite porous sheet in which on a microporous film or a porous sheet, one or more of another porous layer are laminated; and the like may be listed. The microporous film refers to a film having plural micropores therein, having a structure in which these micropores are connected to each other, and allowing gas or liquid to pass from one surface to the other surface.

The porous substrate contains organic materials and/or inorganic materials, having electrical insulation.

It is preferred that the porous substrate contains a thermoplastic resin, from a viewpoint of imparting a shutdown function to the porous substrate. The shutdown function refers to a function of dissolving the material to clog the pores of the porous substrate, thereby blocking ionic migration, and preventing thermal runaway of a battery, when the battery temperature is raised. As the thermoplastic resin, a thermoplastic resin having a melting point less than 200 °C is preferred. As the thermoplastic resin, for example, polyesters such as polyethylene terephthalate; polyolefins such as polyethylene and polypropylene; and the like may be mentioned, and among them, polyolefins are preferred.

As the porous substrate, a microporous film containing polyolefin (referred to as "polyolefin microporous film") is preferred. As the polyolefin microporous film, for example, a polyolefin microporous film which is applied to the conventional separator for a non-aqueous secondary battery may be mentioned, and among them, it is preferred to select those having good mechanical properties and ion permeability.

It is preferred that the polyolefin microporous film contains polyethylene, from the viewpoint of exhibiting the shutdown function.

It is preferred that the polyolefin microporous film contains polyethylene and polypropylene, from the viewpoint of imparting thermal resistance to the extent that the film is not easily broken when exposed to a high temperature. As the polyolefin microporous film, a microporous film in which polyethylene and polypropylene are present in a mixed state in a layer may be listed. In addition, from the viewpoint of compatibility of the shutdown function and thermal resistance, a polyolefin microporous film having a lamination structure with two or more layers, in which at least one layer contains polyethylene and at least one layer contains polypropylene, is also preferred.

As the polyolefin contained in the polyolefin microporous film, a polyolefin having a weight-average molecular weight (Mw) of from 100,000 to 5,000,000 is preferred. In the case that the polyolefin has a Mw of 100,000 or more, sufficient mechanical properties may be secured. Meanwhile, the polyolefin has a Mw of 5,000,000 or less, the shutdown characteristic is good, and film molding is easy.

The polyolefin microporous film may be manufactured by, for example, the following methods. That is, the method includes to extrude a molten polyolefin from a T-die to form a sheet, crystallize and elongate the sheet, and further subject the sheet to heat treatment, thereby obtaining a microporous film. Otherwise, the method includes to extrude a polyolefin melted with a plasticizer such as liquid paraffin from a T-die, cool it to form a sheet, elongate the

sheet, extract the plasticizer, and perform heat treatment, thereby obtaining a microporous film.

As the porous sheet composed of a fibrous material, non-woven fabric composed of fibrous materials such as polyesters such as polyethylene terephthalate; polyolefins such as polyethylene and polypropylene; thermal resistant resins such as aromatic polyamide, polyimide, polyethersulfone, polysulfone, polyetherketone and polyetherimide; and the like, or paper may be mentioned. Herein, the thermal resistant resin refers to a polymer having a melting point of 200°C or higher, or a polymer having no melting point and a decomposition temperature of 200°C or higher.

As the composite porous sheet, a sheet in which a functional layer is laminated on the microporous film or microporous sheet may be mentioned. This composite porous sheet is preferred since a further function may be added by the functional layer. As the functional layer, a porous layer containing a thermal resistant resin, or a porous layer containing a thermal resistant resin and an inorganic filler is preferred, from the viewpoint of imparting thermal resistance. As the thermal resistant resin, aromatic polyamides, polyimides, polyethersulfone, polysulfone, polyetherketones, polyetherimides and the like may be mentioned. As the inorganic filler, metal oxides such as alumina, metal hydroxides such as magnesium hydroxide, and the like may be mentioned. As the method of providing the functional layer on the microporous film or porous sheet, a method of coating the functional layer on the microporous film or porous sheet, a method of bonding the functional layer to the microporous film or porous sheet with an adhesive, a method of thermocompressing the microporous film or porous sheet with the functional layer, and the like may be mentioned.

The porous substrate may be subjected to various surface treatments within the range of not impairing the nature of the porous substrate, for the purpose of improving wettability of the coating liquid for forming the adhesive porous layer. As the surface treatment, corona treatment, plasma treatment, flame treatment, UV irradiation treatment, and the like may be mentioned.

[Characteristics of Porous Substrate]

The porous substrate may have a thickness of, preferably from 3 μm to 25 μm, more preferably from 5 μm to 25 μm, still more preferably from 5 μm to 20 μm, from the viewpoint of obtaining good mechanical properties and internal resistance.

It is preferred that the porosity of the porous substrate is from 20 to 60%, from the viewpoint of obtaining proper film resistance and shutdown function.

The Gurley value of the porous substrate (JIS P8117:2009) is preferably from 50 sec/100 ml to 800 sec/100 ml, more preferably from 50 sec/100 ml to 400 sec/100 ml, from the viewpoint of preventing short circuit a battery and obtaining good ion permeability.

The piercing strength of the porous substrate is preferably 180 gf or more, more preferably 200 gf or more, from the viewpoint of improving a production yield. The piercing strength of the porous substrate is measured by performing a piercing test under the condition of a curvature radius of a needle tip of 0.5 mm, and a piercing speed of 2 mm/sec, using a KES-G5 handy compression tester from KATO TECH CO., LTD., to obtain a maximum piercing strength (gf).

It is preferred that the porous substrate has an average pore diameter of from 15 nm to 100 nm. When the porous substrate has an average pore diameter of 15 nm or more, ions are easily migrated, so that good battery performance is easily obtained. In this regard, the porous substrate has an average pore diameter of more preferably 25 nm or more, still more preferably 30 nm or more. Meanwhile when the porous substrate has an average pore diameter of 100 nm or less, peel strength between the porous substrate and the adhesive porous layer may be improved, and a good shutdown function may be exhibited. In this regard, the porous substrate may have an average pore diameter of more preferably 90 nm or less, still more preferably 80 nm or less.

The average pore diameter of the porous substrate is a value measured using a Perm porosimeter, and for example, may be measured using a Perm porosimeter (available from PMI, CFP-1500-A), in accordance with ASTM E1294-89.

[Adhesive Porous Layer]

In the present disclosure, the adhesive porous layer is a porous layer that is provided on one side or both sides of the porous substrate, and contains a polyvinylidene fluoride type resin.

The adhesive porous layer has plural fine pores therein, has a structure in which these fine pores are connected with each other, and allows gas or liquid to pass from one surface to the other surface. The adhesive porous layer is a layer that is provided on one side or both sides of the porous substrate as an outermost layer of the separator, and may be adhered to the electrode when superimposing the separator and the electrode, and performing thermal press. It is preferred that the adhesive porous layer is provided on both surfaces, rather than provided on only one surface of the porous substrate, from the viewpoint of having excellent battery strength and excellent cycle characteristics (capacity retention) of the battery. It is because when the adhesive porous layer is provided on both surfaces of the porous substrate, both surfaces of the separator may be well-adhered to both electrodes through the adhesive porous layer.

The adhesive porous layer contains at least PVDF type resin A. The adhesive porous layer may further contain, for instance, a resin(s) other than a PVDF type resin and a filler.

Note that in the disclosure, PVDF type resin A may be included on at least one side of the separator. For example, the one side is a PVDF type resin A-containing adhesive porous layer and the other side may be an adhesive porous layer containing another PVDF type resin, such as a PVDF homopolymer or a VDF-HFP binary copolymer, or another resin such as an acrylic resin. As such, when the separator having different adhesive porous layers disposed on both sides is applied to batteries including a negative electrode using, in particular, a styrene-butadiene rubber binder, it is preferable that a PVDF type resin A-containing adhesive porous layer is disposed on the negative electrode side.

(PVDF type Resin)

PVDF type resin A of the disclosure is a copolymer having a melting point of from 130°C to 148°C, and comprising, as monomer components, VDF and a monomer represented by the following Formula (1):

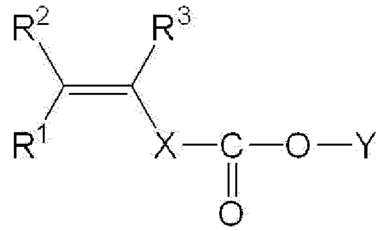

(1)

In Formula (1), each of $R^1$, $R^2$, and $R^3$ independently represents a hydrogen atom, a halogen atom, a carboxyl group or a derivative thereof, or a $C_{1-5}$ alkyl group; X represents a single bond, a $C_{1-5}$ alkylene group, or a substituted $C_{1-5}$ alkylene group; and Y represents a hydrogen atom, a $C_{1-5}$ alkyl group, or a $C_{1-5}$ alkyl group that contains at least one hydroxy group.

The melting point of PVDF type resin A markedly affects the bonding temperature, and when the melting point is higher than 148°C, hot-press at high temperature is needed. Accordingly, the hot-press step may exert harmful effects on battery performance. From such a viewpoint, the melting point of PVDF type resin A is preferably 145°C or lower, more preferably 143°C or lower, and still more preferably 140°C or lower. If the melting point of PVDF type resin is lower than 130°C, the swelling in an electrolyte solution increases. Thus, the melting point is not preferable because this point sometimes exerts harmful effects on battery performance. From such a viewpoint, the melting point of PVDF type resin A is preferably 132°C or higher and more preferably 135°C or higher.

Examples of the halogen atom in $R^1$, $R^2$, or $R^3$ include a fluorine atom, a chlorine atom, and an iodine atom.

Examples of the $C_{1-5}$ alkyl group in $R^1$, $R^2$, or $R^3$ include a methyl group, an ethyl group, a propyl group, an isopropyl group, and a butyl group. A $C_{1-4}$ alkyl group is preferred.

Examples of the $C_{1-5}$ alkylene group in X include a methylene group, an ethylene group, and a propylene group.

Examples of the "substituted $C_{1-5}$ alkylene group" in X include 2-methylethyl and 2-ethylpropyl.

Examples of the $C_{1-5}$ alkyl group in Y include a methyl group, an ethyl group, a propyl group, an isopropyl group, and a butyl group. A $C_{1-4}$ alkyl group is preferred.

Examples of the "a $C_{1-5}$ alkyl group that contains at least one hydroxy group" in Y include 2-hydroxyethyl and 2-hydroxypropyl. A $C_{1-3}$ alkyl group that contains at least one hydroxy group is preferred.

A case is more preferable where among the above, $R^1$, $R^2$, and $R^3$ are a hydrogen atom or a $C_{1-4}$ alkyl group; X is a single bond; Y is a $C_{1-4}$ alkyl group or a $C_{1-3}$ alkyl group that contains at least one hydroxy group.

Examples of Formula (1) include, but are not limited to, an acrylic monomer, an unsaturated dibasic acid, and a monoester monomer of unsaturated dibasic acid.

Examples of the acrylic monomer include methyl acrylate, ethyl acrylate, isopropyl acrylate, n-butyl acrylate, methyl methacrylate, ethyl methacrylate, isopropyl methacrylate, butyl methacrylate, 2-hydroxyethyl acrylate, 2-hydroxyethyl methacrylate, 2-hydroxypropyl acrylate, 2-hydroxypropyl methacrylate, acrylic acid, methacrylic acid, butenoic acid, pentene, and hexenoic acid.

Examples of the unsaturated dibasic acid include unsaturated dicarboxylic acid. More specific examples include (anhydrous) maleic acid, citraconic acid, and itaconic acid.

Examples of the monoester of unsaturated dibasic acid include a maleic acid monomethyl ester, a maleic acid monoethyl ester, a citraconic acid monomethyl ester, a citraconic acid monoethyl ester, an itaconic acid monomethyl ester, and an itaconic acid monoethyl ester. A maleic acid monomethyl ester or a citraconic acid monomethyl ester is particularly preferred.

Here, when X is a substituted alkylene group, X may contain a hetero atom-containing substituent. Examples

of a monomer containing oxygen as a hetero atom include carboxyethyl acrylate, acryloyloxyethyl succinic acid, and methacryloyloxyethyl succinic acid.

It is preferable that the content percentage of the monomer, represented by Formula (1), in PVDF type resin A is 0.1 mol% or more. This causes the resin A to have an acidic group or an ester group in a molecule, thereby improving affinity for electrode material. Then, the PVDF type resin A included in the adhesive porous layer interacts with an electrode active substance. This results in an increase in adhesion (adhesion by wet heat press or dry heat press) between the adhesive porous layer and the electrode(s), extending pressing conditions needed even in the case of, in particular, wet heat press.

The content percentage of the monomer, represented by Formula (1), in PVDF type resin A is more preferably 0.1 mol% or more, still more preferably 0.2 mol% or more, and particularly preferably 0.5 mol% or more. The upper limit of the content percentage of the monomer, represented by Formula (1), in resin A is preferably 3.0 mol% or less.

PVDF type resin A may be a copolymer further comprising, as a monomer component(s), another polymer(s) in addition to vinylidene fluoride and a monomer represented by Formula (1). Examples of the other monomer(s) include hexafluoropropylene (HFP), tetrafluoroethylene, trifluoroethylene, chlorotrifluoroethylene, vinyl fluoride, and any combination of one or more thereof. It is preferable that PVDF type resin A is a copolymer comprising, as monomer components among them, vinylidene fluoride, hexafluoropropylene (HFP), and a monomer represented by Formula (1). If PVDF type resin A is a copolymer comprising, as monomer components, VDF, HFP, and a monomer represented by Formula (1), the content of the monomer represented by Formula (1), as a monomer component, is preferably from 0.5 mol% to 5 mol% in view of enhancing effects of the disclosure. Likewise, when PVDF type resin A is a copolymer comprising, as monomer components, VDF, HFP, and a monomer represented by Formula (1), the content of HFP as a monomer component is preferably from more than 3.5 mol% to 7 mol% and more preferably from 4 mol% to 6.5 mol%.

In the present disclosure, it is preferred that the PVDF type resin A has a weight-average molecular weight (Mw) of from 300,000 to 3,000,000. When the PVDF type resin A has Mw of 300,000 or more, mechanical properties allowing the adhesive porous layer to withstand the adhesive treatment to the electrode may be effectively imparted. In this regard, the PVDF type resin A has Mw of preferably 500,000 or more, more preferably 1,000,000 or more. Meanwhile, if the Mw of PVDF-based resin A is 3,000,000 or less, the viscosity of coating liquid for forming an adhesive porous layer by coating is not too high. Thus, the PVDF-based resin A is suitable for the art in forming an adhesive porous layer with a uniform porous structure. In addition, when wet heat press is performed under mild conditions, it is easy to favorably keep the fluidity and achieve wet adhesion. From such viewpoints, the Mw of PVDF-based resin A is more preferably 2,500,000 or less and still more preferably 2,300,000 or less.

Here, in the disclosure, PVDF type resin A having a weight-average molecular weight of less than 300,000 may be used. In this case, it is preferable that: the polyvinylidene fluoride type resin included in the adhesive porous layer further comprises a polyvinylidene fluoride type resin (PVDF type resin B) having a weight-average molecular weight of 300,000 or more; and the middle point between the melting points of the PVDF type resin A and the PVDF type resin B is 155°C or lower.

When the Mw of PVDF type resin B is 300,000 or more, superior mechanical strength can be imparted at the time of performing wet heat press onto an electrode(s). The Mw of PVDF type resin A, in particular, may be less than 300,000. Then, a higher Mw of PVDF type resin B is preferable because it is possible to impart mechanical properties with which these resins are durable during electrode bonding processing. In addition, PVDF type resin B may be selected such that the middle point between the melting points of PVDF type resin A and the PVDF type resin B is 155°C or lower. In this case, it is possible to favorably maintain the degree of swelling in an electrolyte solution. Accordingly, expression of the strength of wet bonding to the PVDF type resin A is not blocked even in mild wet heat press conditions.

The Mw of PVDF type resin B is more preferably 500,000 or higher and still more preferably 800,000 or higher. In addition, the Mw of PVDF type resin B is more preferably 3,000,000 or less and still more preferably 2,500,000 or less.

Each of the weight-average molecular weight (Mw) of the PVDF type resin A and the PVDF type resin B is a value measured by gel permeation chromatography (GPC). Specifically, the molecular weight measurement by GPC is performed by using GPC equipment, "GPC-900" available from JASCO Corporation, two TSKgel SUPER AWM-H's available from TOSOH corporation in the column, and dimethyl formamide as the solvent, under the condition of a temperature of 40°C, and a flow rate of 0.6 mL/min, thereby obtaining a molecular weight in terms of polystyrene.

Examples of a PVDF type resin production process include emulsion polymerization and suspension polymerization. It is also possible to select a commercially available PVDF type resin having a particular melting point and containing a particular copolymerization unit.

The content of PVDF type resin A included in the adhesive porous layer is preferably 10% by mass or higher, more preferably 25% by mass or higher, and still more preferably 50% by mass or higher with respect to the total amount of all resins included in the adhesive porous layer.

(Other Resins)

An adhesive porous layer in the disclosure may contain a polyvinylidene fluoride type resin(s) that is other than PVDF type resin A and is miscible with PVDF type resin A and may contain another resin(s) except for a polyvinylidene fluoride type resin.

Examples of the other polyvinylidene fluoride type resin(s) miscible with PVDF type resin A include: as a monomer component, a VDF-HFP binary copolymer free of a monomer represented by Formula (1); a vinylidene fluoride homopolymer (i.e., polyvinylidene fluoride); a copolymer containing vinylidene fluoride and at least one kind selected from fluorine-containing monomers (e.g., tetrafluoroethylene, trifluoroethylene, chlorotrifluoroethylene, vinyl fluoride); and a copolymer containing vinylidene fluoride, hexafluoropropylene, and at least one kind selected from fluorine-containing monomers (e.g., tetrafluoroethylene, trifluoroethylene, chlorotrifluoroethylene, vinyl fluoride). The above-described PVDF type resin B is included in the "other polyvinylidene fluoride type resin(s)".

As the resin other than the polyvinylidene fluoride type resin, a homopolymer or copolymer of fluorine type rubber, an acrylic resin, a styrene-butadiene copolymer and a vinylnitrile compound (acrylonitrile, methacrylonitrile, etc.), carboxymethyl cellulose, hydroxyalkyl cellulose, polyvinyl alcohol polymer, polyvinyl butyral, polyvinyl pyrrolidone, polyether (polyethylene oxide, polypropylene oxide, etc.) and the like may be listed.

[Filler]

In the present disclosure, the adhesive porous layer may contain a filler of inorganic materials or organic materials. The adhesive porous layer contains a filler such that heat resistivity and affinity of electrolyte solution can be increased. In this case, the content or particle size thereof is preferably to the extent of not hindering the effect of the present disclosure.

It is preferred that the average primary particle diameter is from 0.01 μm to 5 μm. The lower limit thereof is more preferably 0.1 μm or more, and the upper limit thereof is more preferably 1.5 μm or less, and still more preferably 1 μm or less.

It is preferred that the particle size distribution of the filler is $0.1\ \mu m < d90\text{-}d10 < 3\ \mu m$, wherein d10 denotes a 10% cumulative particle diameter (μm) in the volume-based particle size distribution calculated from the small particle side; and d90 denotes a 90% cumulative particle diameter (μm) in the volume-based particle size distribution calculated from the small particle side. The particle size distribution is measured using for example, a laser diffraction type particle size distribution measuring apparatus (e.g., Mastersizer 2000, a product available from Sysmex Corporation), water as a dispersion solvent, and a non-ionic surfactant, Triton X-100 as a dispersing agent.

The particle shape of the filler is not limited, and may be a shape close to a sphere, or a plate shape, but from the viewpoint of the short circuit inhibition of the battery, the plate-shaped particles are preferred, and non-agglomerated primary particles are preferred.

The content of filler included in the adhesive porous layer is preferably from 40% by volume to 85% by volume of the total solid content of the adhesive porous layer. When the filler content is 40% by volume or more, the separator heat resistance and cell strength should be further improved as well as the battery safety should also be secured. When the filler content is 85% by volume or less, the moldability and shape of the adhesive porous layer are preserved, contributing to an increase in the cell strength. The filler content with respect to the total solid content of the adhesive porous layer is more preferably 45% by volume or higher and still more preferably 50% by volume or higher, and more preferably 80% by volume or lower and still more preferably 75% by volume or lower.

[Inorganic Filler]

It is preferred that the inorganic filler in the present disclosure is stable to the electrolyte solution, while being electrochemically stable. Specifically for example, metal hydroxides such as magnesium hydroxide, aluminum hydroxide, calcium hydroxide, chromium hydroxide, zirconium hydroxide, cerium hydroxide, nickel hydroxide and boron hydroxide; metal oxides such as magnesium oxide, alumina, boehmite (alumina monohydrate), titania, silica, zirconia and barium titanate; carbonates such as magnesium carbonate and calcium carbonate; sulfates such as magnesium sulfate, calcium sulfate and barium sulfate; metal fluoride such as magnesium fluoride and calcium fluoride; clay mineral such as calcium silicate and talc, and the like may be listed. These inorganic fillers may be used alone or in combination of two or more. The inorganic filler may be surface-modified by a silane coupling agent.

As the organic filler, a crosslinked acryl resin such as crosslinked methyl polymethacrylate and crosslinked polystyrene may be listed, and the crosslinked methyl polymethacrylate is preferred.

(Other Additives)

The adhesive porous layer in the present disclosure may contain an additive, for example, a dispersing agent such as a surfactant, a wetting agent, a defoamer, a pH adjusting agent or the like. When the dispersing agent is added to the coating liquid for forming the adhesive porous layer, the coating liquid may be improved in that dispersibility, coatability and preservation stability. When the wetting agent, defoamer and pH adjusting agent are added to the coating liquid for forming the adhesive porous layer, for example, the coating liquid may be well-mixed with the porous substrate, suppressing air entrainment to the coating liquid, or adjusting pH.

-Characteristics of Adhesive Porous Layer-

The thickness of the adhesive porous layer is preferably from 0.5 μm to 5 μm, on one surface of the porous substrate. When the thickness is 0.5 μm or more, the adhesiveness to the electrode is good, and as a result, the battery strength is better. From this point of view, the thickness is more preferably 1 μm or more. Meanwhile, when the thickness is 5.0 μm or less, the cycle characteristics and the load characteristics of the battery is excellent. From this point of view, the thickness is more preferably 4.5 μm or less, and still more preferably 4 μm or less.
When the adhesive porous layer is provided on both surfaces of the porous substrate, the difference between the coated amount on one surface and the coated amount on the other surface is preferably 20 % by mass or less of the total coated amount of both surfaces. When the coated amount is 20 % by mass or less, the separator is difficult to be curved, has good handling, and also has good cycle characteristics of the battery.
The porosity of the adhesive porous layer is preferably from 30% to 80%. When the porosity is 80% or less, the mechanical properties to withstand the press process of adhering to the electrode may be secured, and the surface opening ratio is not unduly high, thereby being suitable for securing adhesive strength. Meanwhile, the porosity of 30% or more is preferred for good ion permeability.
The average pore diameter of the adhesive porous layer is preferably from 10 nm to 300 nm, more preferably from 20 nm to 200 nm. When the average pore diameter is 10 nm or more (preferably 20 nm or more), even in the case that the adhesive porous layer is impregnated with the electrolyte solution, and the resin contained in the adhesive porous layer swells, the clogging of the pores is unlikely to occur. Meanwhile, when the average pore diameter is 300 nm or less (preferably 200 nm or less), the non-uniformity of the open pores on the adhesive porous layer surface is suppressed, so that the bonding points are evenly scattered, thereby having better adhesiveness to the electrode. In addition, when the average pore diameter is 300 nm or less (preferably 200 nm or less), the uniformity of ionic migration is high, thereby having better cycle characteristics and load characteristics of the battery.
The average pore diameter (nm) of the adhesive porous layer is calculated by the following equation, assuming that all the pores are cylindrical:

$$d=4\ V/S$$

wherein d represents the average pore diameter (diameter) of the adhesive porous layer; V represents the pore volume per 1 $m^2$ of the adhesive porous layer; and S represents the pore surface area per 1 $m^2$ of the adhesive porous layer.
The pore volume, V per 1 $m^2$ of the adhesive porous layer is calculated from the porosity of the adhesive porous layer.
The pore surface area, S per 1 $m^2$ of the adhesive porous layer is calculated as follows:
First, the specific surface area ($m^2$/g) of the porous substrate and the specific surface area ($m^2$/g) of the separator are calculated from nitrogen gas adsorption amount, by applying a BET equation as a nitrogen gas adsorption method. This specific surface area ($m^2$/g) is multiplied by each of the basis weights (g/$m^2$) to calculate each of the pore surface areas per 1 $m^2$. Further, the pore surface area per 1 $m^2$ of the porous substrate is subtracted from the pore surface area per 1 $m^2$ of the separator, thereby calculating the pore surface area, S per 1 $m^2$ of the adhesive porous layer.

[Characteristics of Separator for Non-aqueous Secondary Battery]

The separator of the present disclosure has a thickness of preferably from 5 μm to 35 μm, more preferably from 5 μm to 30 μm, still more preferably from 5 μm to 25 μm, still more preferably from 5 μm to 20 μm, from the viewpoint of the balance among mechanical strength, energy density of a battery, and output characteristics.
It is preferred that the porosity of the separator of the present disclosure is from 30% to 60%, from the viewpoint of mechanical strength, adhesiveness to the electrode, and ion permeability.
The Gurley value of the separator of the present disclosure (JIS P8117:2009) is preferably from 50 sec/100 ml to 800 sec/100 ml, more preferably from 50 sec/100 ml to 450 sec/100 ml, from the viewpoint of good balance between

mechanical strength and film resistance.

The separator of the present disclosure has the value obtained by subtracting the Gurley value of the porous substrate from the Gurley value of the separator (in a state that the adhesive porous layer is formed on the porous substrate) (hereinafter, referred to as "Gurley value difference") is preferably 300 sec/100 ml or less, more preferably 150 sec/100 ml or less, still more preferably 100 sec/100 ml or less, from the viewpoint of ion permeability. With the Gurley value difference of 300 sec/100 ml or less, the adhesive porous layer is not excessively dense, and the ion permeability is well-maintained, thereby obtaining excellent battery characteristics. Meanwhile, the Gurley value difference is preferably 0 sec/100 ml or more, and for increasing the adhesive strength between the adhesive porous layer and the porous substrate, preferably 10 sec/100 ml or more.

It is preferred that the film resistance of the separator of the present disclosure is from 1 ohm·$cm^2$ to 10 ohm·$cm^2$, from the viewpoint of the load characteristics of the battery. Herein, the film resistance refers to a resistance value when impregnating the separator with the electrolyte solution, and is measured by an alternating current method. Since the film resistance value is varied with the kind of electrolyte solution and the temperature, the value is measured at a temperature of 20°C or less using a mixed solvent of 1 mol/L of $LiBF_4$-propylene carbonate : ethylene carbonate (mass ratio 1:1) as the electrolyte solution.

The piercing strength of the separator of the present disclosure is preferably from 180 g to 1,000 g, more preferably from 200 g to 600 g. The measurement method of the piercing strength of the separator is identical to the measurement method of the piercing strength of the porous substrate.

It is preferred that the thermal shrinkage of the separator of the present disclosure at 120°C is 12% or less in both of MD direction (machine direction) and TD direction (transverse direction), from the viewpoint of the balance between the shape stability and the shutdown property.

It is preferred that the curvature rate of the separator of the present disclosure is from 1.2 to 2.8, from the viewpoint of ion permeability.

It is preferred that the moisture amount (by mass) contained in the separator of the present disclosure is 1000 ppm or less. As the moisture amount of the separator is smaller, when configuring the battery, the reaction of the electrolyte solution and water may be suppressed, and gas generation in the battery may be suppressed, thereby improving the cycle characteristics of the battery. In this regard, the moisture amount contained in the separator of the present disclosure is more preferably 800 ppm or less, still more preferably 500 ppm or less.

[Manufacturing Method of Separator for Non-aqueous Secondary Battery]

The separator of the present disclosure is manufactured, for example, by coating a coating liquid containing a PVDF type resin on the porous substrate to form a coated layer, and then solidifying the PVDF type resin contained in the coated layer, thereby forming the adhesive porous layer on the porous substrate. Specifically, the adhesive porous layer may be formed, for example, by the following wet coating method.

The wet coating method is a film forming method to sequentially perform the following processes: (i) a coating liquid preparation process of dissolving or dispersing a PVDF type resin in a solvent to prepare the coating liquid, (ii) a coating process of coating the coating liquid on a porous substrate to form a coated layer, (iii) a solidification process of contacting the coated layer with the coagulating solution to cause phase separation, while solidifying the PVDF type resin, thereby obtaining a composite having an adhesive porous layer on the porous substrate, (iv) a washing process of washing the composite with water, and (v) a drying process of removing water from the composite film. The details of the wet coating method preferred for the separator of the present disclosure is as follows:
As the solvent dissolving or dispersing the PVDF type resin (hereinafter, referred to as "good solvent"), used in the preparation of the coating liquid, polar amide solvents such as N-methyl-2-pyrrolidone (NMP), dimethylacetamide (DMAc), dimethyl formamide, and dimethyl formamide are preferably used.

From the viewpoint of forming an adhesive porous layer having a good porous structure, it is preferred that a phase separating agent causing phase separation is mixed with the good solvent. As the phase separating agent, water, methanol, ethanol, propyl alcohol, butyl alcohol, butandiol, ethylene glycol, propylene glycol, tripropylene glycol (TPG), etc. may be listed. It is preferred that the phase separating agent is mixed with the good solvent within a range of securing suitable viscosity for coating.

As the solvent used in the preparation of the coating liquid, a mixed solvent containing 60 % by mass or more of the good solvent, and from 5 % by mass to 40 % by mass of the phase separating agent is preferred, from the viewpoint of forming the adhesive porous layer having a good porous structure.

It is preferred that the concentration of the PVDF type resin in the coating liquid is from 3 % by mass to 10 % by mass with respect to the total mass of the coating liquid, from the viewpoint of forming the adhesive porous layer having a good porous structure.

In the case of containing a filler and/or other components in the adhesive porous layer, the filler and/or other component may be dissolved or dispersed in the coating liquid.

The coating liquid may contain a dispersing agent such as a surfactant, a wetting agent, a defoamer, a pH adjusting agent, or the like. These additives may remain in the adhesive porous layer, if it is electrochemically stable and does not inhibit the reaction in the battery in the use range of the non-aqueous secondary battery.

A coagulating solution is generally composed of a good solvent used in the preparation of the coating liquid, a phase separating agent and water. It is preferred for production that the mixing ratio of the good solvent and the phase separating agent is adjusted to the mixing ratio of the mixed solvent used in the preparation of the coating liquid. It is preferred for formation of a porous structure and production that the water content of the coagulating solution is from 40 % by mass to 90 % by mass.

For coating the coating liquid on the porous substrate, a conventional coating manner using a Meyer bar, a die coater, a reverse roll coater, a gravure coater, etc. may be applied. When forming the adhesive porous layer on both surfaces of the porous substrate, it is preferred to coat the coating liquid simultaneously on both surfaces of the substrate, from the viewpoint of production.

The adhesive porous layer may be prepared by a dry coating method, as well as the wet coating method as described above. The dry coating method is a method to obtain the adhesive porous layer, by coating the coating liquid containing the PVDF type resin and the solvent on the porous substrate, and drying this coated layer to remove the solvent by volatilization. However, since the coated layer is more likely to be dense by the dry coating method, as compared with the wet coating method, the wet coating method is preferred for obtaining a good porous structure.

The separator of the present disclosure may be also manufactured by the method of manufacturing the adhesive porous layer as an independent sheet, superimpose this adhesive porous layer on the porous substrate, and forming a composite by thermocompression and/or an adhesive. As the method of manufacturing the adhesive porous layer as an independent sheet, the method of applying a wet coating method or a dry coating method as described above, and forming the adhesive porous layer on the peeling sheet, may be listed.

<Non-aqueous Secondary Battery>

The non-aqueous secondary battery of the present disclosure is a non-aqueous secondary battery obtaining electromotive force by lithium doping and dedoping, and has a positive electrode; a negative electrode; and the separator of the present disclosure. Doping means occlusion, supporting, adsorption or insertion, and a phenomenon in which lithium ions enter the active substance of the electrode such as a positive electrode.

The non-aqueous secondary battery of the present disclosure has a structure in which, for example, a battery element having the positive electrode and the negative electrode facing each other through the separator is enclosed together with the electrolyte solution inside of the exterior material. The non-aqueous secondary battery of the present disclosure is preferred for particularly a lithium ion secondary battery. Use of the separator excellent in bonding to an electrode(s) according to the disclosure enables a non-aqueous secondary battery of the disclosure to be manufactured efficiently. The non-aqueous secondary battery of the disclosure, including the separator excellent in bonding to an electrode(s) according to the disclosure, excels in the cell strength.

Hereinafter, the exemplary forms of the positive electrode, the negative electrode, the electrolyte solution, and the exterior materials provided in the non-aqueous secondary battery of the present disclosure will be described.

The positive electrode may have a structure in which an active substance layer containing the positive electrode active substance and the binder resin is formed on the current collector. The active substance layer may further contain a conductive aid. The example of the positive electrode active substance may include a lithium-containing transition metal oxide and the like, and specifically, $LiCoO_2$, $LiNiO_2$, $LiMn_{1/2}Ni_{1/2}O_2$, $LiCo_{1/3}Mn_{1/3}Ni_{1/3}O_2$, $LiMn_2O_4$, $LiFePO_4$, $LiCo_{1/2}Ni_{1/2}O_2$, $LiAl_{1/4}Ni_{3/4}O_2$, etc. The example of the binder resin may include a polyvinylidene fluoride type resin. The example of the conductive aid may include carbon materials such as acetylene black, ketjen black, graphite powder and the like. The example of the current collector may include aluminum foil, titanium foil, stainless steel foil and the like having a thickness of from 5 $\mu$m to 20 $\mu$m.

According to an embodiment of the separator of the present disclosure, the adhesive porous layer has excellent oxidation resistance, and thus, by disposing the adhesive porous layer in the positive electrode side of the non-aqueous secondary battery, it is easy to apply $LiMn_{1/2}Ni_{1/2}O_2$, $LiCo_{1/3}Mn_{1/3}Ni_{1/3}O_2$, etc. which may be operated at high voltage of 4.2 V or more, as the positive electrode active substance.

The negative electrode may have a structure in which the active substance layer containing the negative electrode active substance and the binder resin is formed on the current collector. The active substance layer may further contain a conductive aid. As the negative electrode active substance, a material capable of electrochemically occluding lithium, specifically for example, carbon materials; an alloy of lithium with silicon, tin, aluminum, etc.; and the like may be listed. As the binder resin, for example, a polyvinylidene fluoride type resin, a styrene-butadiene copolymer and the like may be listed. The example of the conductive aid may include carbon materials such as acetylene black, ketjen black, graphite powder and the like. The example of the current collector may include copper foil, nickel foil, stainless foil and the like having a thickness of from 5 $\mu$m to 20 $\mu$m. In addition, instead of the negative electrode, metal lithium

foil may be used as the negative electrode.

It is preferred that the electrode contains more binder resin in the active substance layer, from the viewpoint of adhesiveness to the separator. Meanwhile, from the viewpoint of increasing energy density of the battery, it is preferred to contain more active substance in the active substance layer, and it is preferred to contain a relatively small amount of the binder resin. Since the separator of the present disclosure has excellent adhesion to the electrode, it is possible to decrease the amount of the binder resin in the active substance layer, thereby increasing the amount of the active substance, and thus, increasing the energy density of the battery. The non-aqueous secondary battery of the present disclosure has excellent adhesion to the negative electrode using a water-based binder (specifically a styrene-butadiene copolymer), as well as the negative electrode using a solvent-based binder (specifically a polyvinylidene fluoride type resin), by applying the separator of the present disclosure.

The electrolyte solution is a solution of a lithium salt dissolved in a non-aqueous solvent. The example of the lithium salt includes $LiPF_6$, $LiBF_4$, $LiClO_4$ and the like. The example of the non-aqueous solvent includes cyclic carbonates such as ethylene carbonate, propylene carbonate, fluoroethylene carbonate, difluoroethylene carbonate and vinylene carbonate; chain carbonates such as dimethyl carbonate, diethyl carbonate, ethylmethyl carbonate and a fluorine substituent thereof; cyclic esters such as $\gamma$-butyrolactone and $\gamma$-valerolactone; and the like, and these may be used alone, or in combination. As the electrolyte solution, it is preferred to mix the cyclic carbonate and the chain carbonate in a mass ratio (cyclic carbonate : chain carbonate) of from 20:80 to 40:60, and dissolve the lithium salt at from 0.5 mol/L to 1.5 mol/L.

As the exterior materials, a metal can, a pack made of an aluminum laminate film, or the like may be listed. The shape of the battery may be a square, a cylinder, a coin, or the like, but the separator of the present disclosure is preferred for any shape.

<Method of Manufacturing Non-aqueous Secondary Battery>

In a non-aqueous secondary battery-manufacturing method of the disclosure, the following steps are carried out in this order.

(i) Step of disposing, between a positive electrode and a negative electrode, the above-described separator for a non-aqueous secondary battery according to the disclosure to produce a layered body.
(ii) Step of housing the layered body inside an exterior material, injecting an electrolyte solution into an inside of the exterior material, and then sealing the exterior material to produce a battery element.
(iii) Step of subjecting the battery element to heat pressing at a temperature of from 65°C to 75°C to bond the separator for a non-aqueous secondary battery to the above and/or the negative electrode.

In the step (i), the disposition of the separator between the positive electrode and the negative electrode may be carried out in the manner of layering the positive electrode, the separator and the negative electrode in this order by at least one layer (so called, stack manner), or in the manner of superimposing the positive electrode, the separator, the negative electrode and the separator in this order, and winding them in a longitudinal direction.

In step (ii), the layered body is housed inside an exterior material, and heat press (dry heat press) may be performed before an electrolyte solution is injected. In this case, because the electrode(s) and the separator are bonded before the layered body is housed in the exterior material, layered body deformation occurring during transfer for housing the layered body in the exterior material is suppressed. In addition, the layered body is further subjected to wet heat press in step (iii) while a PVDF type resin included in the adhesive porous layer of the separator is swelling in an electrolyte solution. This may cause the bonding between the electrode(s) and the separator to be more rigid. The wet heat press in this case may be performed under mild conditions in which the electrode-separator bonding, somehow weakened by impregnation in the electrolyte solution, is restored to some extent. That is, the temperature during the wet heat press can be set to a relatively low temperature. Thus, it is possible to suppress gas generation caused by electrolyte solution and electrolyte decomposition in a battery at the time of manufacturing the battery. In dry heat press conditions, the pressing pressure is preferably from 0.2 MPa to 5 MPa and the temperature is preferably from 20°C to 100°C. Of course, in step (ii), it is just possible that without performing the dry heat press, the layered body is housed inside an exterior material, an electrolyte solution is injected into an inside of the exterior material, and the exterior material is then sealed to produce a battery element.

In step (iii), the battery element produced in step (ii) is subjected to wet heat press. By doing so, the layered body is hot-pressed while a PVDF type resin included in the adhesive porous layer of the separator is swelling in the electrolyte solution. This causes the electrodes and the separator to be bonded well, so that a non-aqueous secondary battery excellent in cell strength and battery properties can be obtained.

In the wet heat press conditions in step (iii), the pressing pressure is preferably from 0.2 MPa to 2 MPa and the temperature is preferably from 60°C to less than 90°C. Because in a separator of the disclosure, in particular, wet

bonding strength is expressed even under mild conditions, the temperature is more preferably from 65°C to 75°C.

EXAMPLES

Hereinafter, the separator and the non-aqueous secondary battery of the present disclosure will be described in more detail, by the following Examples. However, the separator and the non-aqueous secondary battery of the present disclosure are not limited to the following Examples.

<Measurement Method and Evaluation Method>

The measurement method and the evaluation method applied to the Examples and Comparative Examples are as follows:

[Percentages of Copolymerization Components (Monomer Components) in Polyvinylidene Fluoride type Resin]

Nuclear magnetic resonance (NMR) spectra were measured to determine the percentages of copolymerization components in a polyvinylidene fluoride type resin from the ratio of intensities of peaks attributed to respective polymer units. Specifically, 10 mg of a polyvinylidene fluoride type resin was dissolved at 100°C in 0.6 mL of heavy dimethyl sulfoxide. Then, $^{19}$F-NMR spectra at 100°C and $^{1}$H-NMR spectra at room temperature were each measured to determine the percentages of monomers (monomer components) copolymerized.

[Weight-average molecular weight of Polyvinylidene fluoride type resin]

The weight-average molecular weight (Mw) of the polyvinylidene fluoride type resin was measured by gel permeation chromatography (GPC). The molecular weight measurement by GPC was performed by using GPC equipment, "GPC-900" available from JASCO Corporation, two TSKgel SUPER AWM-H’s available from TOSOH corporation in the column, and dimethyl formamide as the solvent, under the condition of a temperature of 40°C, and a flow rate of 0.6 mL/min, thereby obtaining a molecular weight in terms of polystyrene.

[Melting Point of Polyvinylidene Fluoride type Resin Included in Adhesive Porous Layer]

The adhesive porous layer, a coating layer, was removed from the separator to recover a PVDF type resin. The melting point of this PVDF type resin was measured by differential scanning calorimetry (DSC with a differential scanning calorimeter). A Q-series, manufactured by TA Instruments, was used for the DSC measurement.

The temperature was raised, under a nitrogen atmosphere, in a range from 30°C to 200°C at a rate of 5°C/min. In the resulting melting endothermic curve, the maximum peak temperature was determined as the melting point of the polyvinylidene fluoride type resin included in the porous layer. When there were multiple maximum peaks, the temperature on the low-temperature side was employed as the melting point.

[Coated Amount of Adhesive Porous Layer]

The separator was cut into a size of 10 cm x 10 cm to measure the mass, and this mass was divided by the area, thereby calculating the basis weight of the separator. In addition, the porous substrate used in the manufacture of the separator was cut into a size of 10 cm x 10 cm to measure the mass, and this mass was divided by the area, thereby calculating the basis weight of the porous substrate. Further, the basis weight of the porous substrate was subtracted from the basis weight of the separator, thereby calculating the total coated amount of the both surfaces of the adhesive porous layer.

[Film Thickness]

The film thicknesses of the porous substrate and the separator were measured with a contact thickness meter (LITEMATIC manufactured by Mitutoyo Corporation). A cylindrical measurement terminal with a diameter of 5 mm was used. Adjustment was conducted to apply a load of 7 g during measurement. Arbitrary 20 points within 10 cm x 10 cm were measured and averaged.

The layer thickness of the adhesive porous layer was determined by subtracting the film thickness of the porous substrate from the film thickness of the separator.

[Porosity]

The porosity of each of the porous substrate and the separator was determined according to the following calculation method.

In a case in which constituent materials are a, b, c, ... , n; the masses of each of the constituent materials are Wa, Wb, Wc, ... , Wn (g/cm$^2$); the true densities of each of the constituent materials are da, db, dc, ... , dn (g/cm$^3$), and the thickness is t (cm), the porosity ε (%) is determined by the following formula.

$$\varepsilon = \{1 - (Wa/da + Wb/db + Wc/dc + ... + Wn/dn)/t\} \times 100$$

[Gurley Value]

The Gurley value of the porous substrate and the separator was measured with a Gurley type densometer (G-B2C, a product available from TOYO SEIKI, Co., Ltd.) according to JIS P8117:2009.

[Cell Strength]

First, 94 g of a positive electrode active substance lithium cobalt oxide powder, 3 g of a conductive aid acetylene black, and 3 g of a binder polyvinylidene fluoride were dissolved in N-methyl-pyrrolidone to have a concentration of polyvinylidene fluoride of 5% by mass. The mixture was stirred with a double-arm mixer to prepare a slurry for positive electrode. This slurry for positive electrode was coated on one side of aluminum foil with a thickness of 20 μm and pressed after drying to yield a positive electrode having a positive electrode active substance layer.

Next, 300 g of a negative electrode active substance artificial graphite, 7.5 g of a water-soluble dispersion containing 40% by mass of a modified styrene-butadiene copolymer, which is a binder, 3 g of a thickener carboxymethyl cellulose, and an appropriate volume of water were stirred and mixed with a double-arm mixer to produce a slurry for negative electrode. This slurry for negative electrode was coated on copper foil with a thickness of 10 μm as a negative electrode current collector and pressed after drying to yield a negative electrode having a negative electrode active substance layer.

The positive electrode and the negative electrode (with a length of 70 mm and a width of 30 mm) were stacked and layered while each separator obtained in the following Examples and Comparative Examples was interposed. Then, lead tabs were welded to obtain a battery element. This battery element was housed in an aluminum laminated film-made package, impregnated in an electrolyte solution, and hot-pressed at a pressure of 1 MPa and a temperature of from 60 to 90°C for a period of 2 min. Then, the outer package was sealed to obtain a secondary battery (with a thickness of 1.1 mm) for testing. Here, 1 mol/L $LiPF_6$-ethylene carbonate : ethyl methyl carbonate (mass ratio of 3 : 7) was used as the electrolyte solution. The above-obtained secondary battery for testing was subjected to a three-point bending test according to ISO-178, and the battery strength (cell strength) was finally determined.

[Load Characteristics]

The same manufacturing method as for the above-described "Cell Strength" was repeated to manufacture secondary batteries for testing. This pressing temperature was set to 70°C. For each manufactured battery for testing, the discharge capacity at the time of discharging at 0.2C and the discharge capacity at the time of discharging at 2C under an atmosphere at 25°C were measured. Then, a value (%) obtained by dividing the latter by the former was defined as a load characteristic. Here, the charging conditions were 8-h charging at a constant current of 0.2C and a constant voltage of 4.2 V and the discharging conditions were constant current discharging with a cutoff of 2.75 V. Note that when the bonding between the separator and the electrodes is favorable, the cell resistance at a high rate increases a little. Thus, the results of the load characteristic test are an indicator of ion permeability after the bonding.

<Manufacturing of Separators>

[Example 1]

First, 1000 g of ion-exchanged water and 0.6 g of a suspension stabilizer methyl cellulose were put into an autoclave having a content volume of 2 L and having a stirrer. Next, the mixture was stirred at a rotation number of 100 rpm and nitrogen replacement was carried out. Then, 0.6 g of acrylic acid (a monomer represented by Formula (1)), 352 g of vinylidene fluoride (VDF), and 49 g of hexafluoropropylene (HFP) were added while the temperature was raised to 29°C and the pressure was set to 4.1 MPa-G After that, while the mixture was stirred at a stirring rotation number of 600

rpm, 2.0 g of a methanol solution containing 50 mass% of di-n-propyl peroxydicarbonate was added thereto to initiate polymerization. Subsequently, a total of 2.3 g of acrylic acid was gradually added until the polymerization pressure became 1.9 MPa-G, and the polymerization was then terminated.

After the end of the polymerization, the pressure was released and returned to atmospheric pressure. The resulting reaction product was filtered, dehydrated, water-washed, and further dried at 100°C for 20 h to produce 330 g of vinylidene fluoride (VDF)-hexafluoropropylene (HFP)-acrylic acid copolymer (PVDF type resin A) powder.

The resulting PVDF type resin A contained 5.4 mol% of HFP and 0.8 mol% of acrylic acid as monomer components other than VDF and had a melting point of 140°C and a Mw of 950,000.

The PVDF type resin A as so obtained was dissolved in a mixed solvent of dimethylacetamide and tripropylene glycol (dimethylacetamide : tripropylene glycol = 80 : 20 [mass ratio]) to have a resin concentration of 5% by mass. Finally, a coating liquid for adhesive porous material formation was produced. An equal amount of this coating liquid was used to coat both sides of a polyethylene microporous film (with a film thickness of 9 μm, a porosity of 36%, and a Gurley value of 162 s/100 ml). The film was soaked and then solidified in solidifier liquid (water : dimethylacetamide : tripropylene glycol = 62 : 30 : 8 [mass ratio] at a temperature of 40°C). Subsequently, this film was water-washed and dried to obtain a separator having adhesive porous layers on both sides of the polyethylene microporous film.

At this time, the coating amount of adhesive porous layer was 2 $g/m^2$ when those of the both sides were totaled.

[Examples 2 to 8]

The same procedure as of Example 1 was repeated, except that the PVDF type resin A in Example 1 was changed to each copolymer designated in Table 1, to manufacture a separator having adhesive porous layers on both sides of the polyethylene microporous film.

[Example 9]

The PVDF type resin A in Example 1 was dissolved at a concentration of 4% by mass in a mixed solvent (dimethylacetamide : tripropylene glycol = 80 : 20 [mass ratio]). Next, magnesium hydroxide ($Mg(OH)_2$, KISUMA 5P manufactured by Kyowa Chemical Industry Co., Ltd.; with an average primary particle diameter of 0.8 μm) as a filler was further added and uniformly mixed to prepare a coating liquid having a mass ratio of the PVDF type resin A and $Mg(OH)_2$ of 40 : 60.

The prepared coating liquid was used to coat both sides of a polyethylene microporous film (with a film thickness of 9 μm, a porosity of 36%, and a Gurley value of 162 s/100 ml), which is a porous substrate. The film was soaked and then solidified in solidifier liquid (water : dimethylacetamide : tripropylene glycol = 62 : 30 : 8 [mass ratio] at a temperature of 40°C).

Subsequently, the coated polyethylene microporous film was water-washed and further dried to obtain a separator having, on both sides of the polyethylene microporous film, heat-resistant porous layers where the total thickness of the both sides was 5 μm.

[Examples 10 to 11]

Coating liquids were prepared in the same manner as in Example 1, except that the PVDF type resin A in Example 8 and each PVDF type resin B designated in Table 2 had a ratio of 50 : 50 [mass ratio], to manufacture a separator having adhesive porous layers on both sides of the polyethylene microporous film.

The PVDF type resin B in Example 10 contains 3.2 mol% of HFP as a monomer component other than VDF. In addition, the PVDF type resin B in Example 11 is polyvinylidene fluoride, which is a VDF homopolymer.

[Comparative Examples 1 to 5]

The same procedure as of Example 1 was repeated, except that the PVDF type resin A in Example 1 was changed to each copolymer designated in Table 1, to manufacture a separator having adhesive porous layers on both sides of the polyethylene microporous film.

Table 1 shows the physical properties and the evaluation results of the respective separators in Examples 1 to 9 and Comparative Examples 1 to 5. Table 2 shows the physical properties and the evaluation results of the respective separators in Examples 10 to 11.

Note that in Tables 1 and 2, the "Functional group-containing monomer unit" refers to a constitutional unit (monomer component) derived from a monomer represented by Formula 1.

[Table 1]

| | HFP unit | Functional group-containing monomer unit | Melting point | Mw | Cell strength of battery manufactured at each pressing temperature | | | | | Load characteristic |
|---|---|---|---|---|---|---|---|---|---|---|
| | | | | | 60°C | 65°C | 70°C | 75°C | 90°C | |
| | mol% | mol% | °C | $\times 10^4$ | N | N | N | N | N | % |
| Example 1 | 5.4 | 0.80 | 140 | 95 | 7.1 | 10.5 | 8.0 | 7.0 | 4.5 | 92 |
| Example 2 | 6.2 | 1.10 | 133 | 128 | 8.8 | 10.2 | 8.0 | 7.0 | 4.5 | 91 |
| Example 3 | 4.0 | 0.60 | 148 | 160 | 4.8 | 8.2 | 9.4 | 8.0 | 4.6 | 93 |
| Example 4 | 5.4 | 0.58 | 143 | 120 | 6.2 | 8.5 | 9.8 | 9.3 | 4.6 | 92 |
| Example 5 | 5.8 | 0.62 | 142 | 34 | 4.8 | 7.2 | 9.1 | 7.8 | 4.5 | 93 |
| Example 6 | 5.6 | 0.81 | 142 | 310 | 4.8 | 6.9 | 7.3 | 7.3 | 4.5 | 89 |
| Example 7 | 4.5 | 0.49 | 147 | 84 | 4.8 | 5.0 | 7.1 | 7.1 | 4.5 | 88 |
| Example 8 | 4.8 | 0.55 | 144 | 22 | 5.2 | 6.9 | 7.1 | 6.9 | 5.9 | 89 |
| Example 9 | 5.4 | 0.80 | 140 | 95 | 7.3 | 13.2 | 12.3 | 10.9 | 5.2 | 91 |
| Comparative Example 1 | 0 | 1.02 | 165 | 128 | 4.7 | 4.8 | 4.8 | 6.0 | 14.5 | 83 |
| Comparative Example 2 | 1.8 | 0.70 | 159 | 170 | 4.8 | 4.8 | 4.8 | 5.7 | 14.6 | 84 |
| Comparative Example 3 | 2.2 | 0.53 | 152 | 113 | 4.8 | 4.9 | 5.1 | 6.9 | 13.2 | 84 |
| Comparative Example 4 | 5.7 | 0 | 136 | 86 | 6.1 | 4.7 | 4.8 | 4.5 | 5.4 | 84 |
| Comparative Example 5 | 7.2 | 0.52 | 121 | 73 | 9.5 | 9.0 | 6.1 | 4.5 | 4.6 | 81 |

[Table 2]

| | PVDF type resin A | | | | PVDF type resin B | | | | Middle point of each characteristic between PVDF type resin A and PVDF type resin B | | | | Cell strength of battery manufactured at each pressing temperature | | | | | Load characteristic |
|---|---|---|---|---|---|---|---|---|---|---|---|---|---|---|---|---|---|---|
| | HFP unit | Functional group-containing monomer unit | Melting point | Mw | HFP unit | Functional group-containing monomer unit | Melting point | Mw | HFP unit | Functional group-containing monomer unit | Melting point | Mw | 60°C | 65°C | 70°C | 75°C | 90°C | |
| | mol% | mol% | | $\times 10^4$ | mol% | mol% | °C | $\times 10^4$ | mol% | mol% | °C | $\times 10^4$ | N | N | N | N | N | % |
| Example 10 | 4.8 | 0.55 | 144 | 22 | 3.2 | 0 | 159 | 89 | 2.7 | 0.2 | 152 | 56 | 4.6 | 8.8 | 10.3 | 6.9 | 4.4 | 92 |
| Example 11 | 4.8 | 0.55 | 144 | 22 | 0 | 0 | 168 | 92 | 1.1 | 0.2 | 156 | 57 | 4.6 | 4.5 | 7.5 | 7.8 | 12.1 | 89 |

As shown in Table 1, in the cases of Examples 1 to 9 where the melting point and the structure of a PVDF type resin included in the adhesive porous layer is controlled, adhesion at the time of performing wet heat press at a temperature of from 65 to 75°C was superior and the cell strength was thus enhanced. In these cases, the bonding to the electrodes was enabled under the mild conditions. This makes it possible to keep sufficient ion permeability without damaging the porous structure, so that a battery having excellent load characteristics was successfully obtained.

By contrast, in the cases of Comparative Examples 1 to 3, although wet adhesion was expressed at a stringent pressing temperature of 90°C or higher, adhesion at pressing temperatures of from 65 to 75°C was poor and the cell strength was thus low. In the case of Comparative Example 4, the cell strength was not increased at either of the temperatures. In the case of Comparative Example 5, the cell strength was increased at pressing temperatures at or near a low temperature of 60°C. However, the degree of swelling in an electrolyte solution became higher and the results of the battery load characteristic test were thus poorer than those of the others.

In addition, in the cases of Examples 10 to 11 as shown in Table 2, the PVDF type resin A included in the adhesive porous layer was blended with each high-molecular-weight, PVDF type resin B. This blending imparted mechanical properties with which the resins were durable during the bonding to the electrodes. Hence, the cell strength was better than in the case of Example 8. Besides, the load characteristics were also favorable.

## Claims

1. A separator for a non-aqueous secondary battery, comprising:

   a porous substrate; and
   an adhesive porous layer that is provided on one side or both sides of the porous substrate, and that contains a polyvinylidene fluoride type resin,
   wherein the polyvinylidene fluoride type resin contains a copolymer A having a melting point of from 130°C to 148°C; wherein the melting point is measured according to the method described in the description, and contains, as monomer components, vinylidene fluoride and a monomer represented by the following Formula (1):

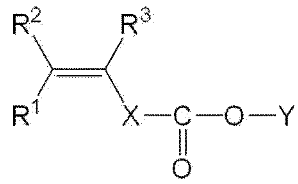

(1)

   wherein, in Formula (1), each of $R^1$, $R^2$, and $R^3$ independently represents a hydrogen atom, a halogen atom, a carboxyl group or a derivative thereof, or a $C_{1-5}$ alkyl group; X represents a single bond, a $C_{1-5}$ alkylene group, or a substituted $C_{1-5}$ alkylene group; and Y represents a hydrogen atom, a $C_{1-5}$ alkyl group, or a $C_{1-5}$ alkyl group that contains at least one hydroxy group.

2. The separator for a non-aqueous secondary battery according to claim 1, wherein the copolymer A has a weight-average molecular weight of from 300,000 to 3,000,000; wherein the weight average molecular weight is measured according to the method described in the description.

3. The separator for a non-aqueous secondary battery according to claim 1, wherein the copolymer A has a weight-average molecular weight of less than 300,000; wherein the weight average molecular weight is measured according to the method described in the description

   the polyvinylidene fluoride type resin further comprises a polyvinylidene fluoride type resin B that is other than the copolymer A and has a weight-average molecular weight of 300,000 or more; wherein the weight average molecular weight is measured according to the method described in the description and
   a middle point between a melting point of the copolymer A and a melting point of the polyvinylidene fluoride type resin B is 155°C or lower; wherein the melting point is measured according to the method described in the description.

4. The separator for a non-aqueous secondary battery according to any one of claims 1 to 3, wherein the adhesive porous layer further comprises an inorganic filler.

5. The separator for a non-aqueous secondary battery according to any one of claims 1 to 4, wherein the copolymer A comprises, as a monomer component, 0.5 mol% or more of the monomer represented by Formula (1).

6. The separator for a non-aqueous secondary battery according to any one of claims 1 to 5, wherein the copolymer A further comprises hexafluoropropylene as a monomer component.

7. A non-aqueous secondary battery that obtains electromotive force by lithium doping and dedoping, the battery comprising:

a positive electrode;
a negative electrode; and
the separator for a non-aqueous secondary battery according to any one of claims 1 to 6, the separator being disposed between the positive electrode and the negative electrode.

8. A method of manufacturing a non-aqueous secondary battery, the method comprising:

disposing, between a positive electrode and a negative electrode, the separator for a non-aqueous secondary battery according to any one of claims 1 to 6 to produce a layered body;
housing the layered body inside an exterior material, injecting an electrolyte solution into an inside of the exterior material, and then sealing the exterior material to produce a battery element; and
subjecting the battery element to heat pressing at a temperature of from 65°C to 75°C to bond the separator for a non-aqueous secondary battery to the positive electrode, the negative electrode, or a combination thereof.

## Patentansprüche

1. Separator für eine nicht-wässrige Sekundärbatterie, umfassend:

ein poröses Substrat und
eine haftende poröse Schicht, die auf einer Seite oder beiden Seiten des porösen Substrats bereitgestellt wird, und die ein Harz vom Polyvinylidenfluoridtyp enthält,
wobei das Harz vom Polyvinylidenfluoridtyp ein Copolymer A mit einem Schmelzpunkt von 130 °C bis 148 °C enthält; wobei der Schmelzpunkt gemäß dem in den technischen Angaben beschriebenen Verfahren gemessen wird, und als Monomerkomponenten Vinylidenfluorid und ein Monomer enthält, das durch die folgende Formel (1) wiedergegeben wird:

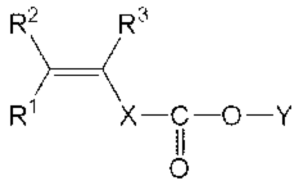

(1)

wobei in Formel (1) jeder von $R^1$, $R^2$ und $R^3$ unabhängig für ein Wasserstoffatom, ein Halogenatom, eine Carboxylgruppe oder ein Derivat davon oder eine $C_{1-5}$-Alkylgruppe steht; X für eine Einfachbindung, eine $C_{1-5}$-Alkylengruppe oder eine substituierte $C_{1-5}$-Alkylengruppe steht; und Y für ein Wasserstoffatom, eine $C_{1-5}$-Alkylgruppe oder eine $C_{1-5}$-Alkylgruppe steht, die mindestens eine Hydroxygruppe enthält.

2. Separator für eine nichtwässrige Sekundärbatterie nach Anspruch 1, wobei das Copolymer A ein durchschnittliches Molekulargewicht (Gewichtsmittel) von 300.000 bis 3.000.000 aufweist; wobei das durchschnittliche Molekulargewicht (Gewichtsmittel) gemäß dem in den technischen Angaben beschriebenen Verfahren gemessen wird.

3. Separator für eine nichtwässrige Sekundärbatterie nach Anspruch 1, wobei das Copolymer A ein durchschnittliches Molekulargewicht (Gewichtsmittel) von weniger als 300.000 aufweist; wobei das durchschnittliche Molekulargewicht (Gewichtsmittel) gemäß dem in den technischen Angaben beschriebenen Verfahren gemessen wird,

das Harz vom Polyvinylidenfluoridtyp des Weiteren ein Harz B vom Polyvinylidenfluoridtyp umfasst, das von Copolymer A verschieden ist und ein durchschnittliches Molekulargewicht (Gewichtsmittel) von 300.000 oder

mehr aufweist; wobei das durchschnittliche Molekulargewicht (Gewichtsmittel) gemäß dem in den technischen Angaben beschriebenen Verfahren gemessen wird, und
ein Mittelpunkt zwischen einem Schmelzpunkt des Copolymers A und einem Schmelzpunkt des Harzes B vom Polyvinylidenfluoridtyp 155 °C oder weniger beträgt; wobei der Schmelzpunkt gemäß dem in den technischen Angaben beschriebenen Verfahren gemessen wird.

**4.** Separator für eine nichtwässrige Sekundärbatterie nach einem der Ansprüche 1 bis 3, wobei die haftende poröse Schicht des Weiteren einen anorganischen Füllstoff umfasst.

**5.** Separator für eine nichtwässrige Sekundärbatterie nach einem der Ansprüche 1 bis 4, wobei das Copolymer A als Monomerkomponente 0,5 Mol.% oder mehr von dem durch Formel (1) wiedergegebenen Monomer umfasst.

**6.** Separator für eine nichtwässrige Sekundärbatterie nach einem der Ansprüche 1 bis 5, wobei das Copolymer A des Weiteren Hexafluorpropylen als Monomerkomponente umfasst.

**7.** Nichtwässrige Sekundärbatterie, die elektromotorische Kraft mittels Lithiumdotierung und -entdotierung erhält, wobei die Batterie umfasst:

eine positive Elektrode;
eine negative Elektrode; und
den Separator für eine nichtwässrige Sekundärbatterie nach einem der Ansprüche 1 bis 6, wobei der Separator zwischen der positiven Elektrode und der negativen Elektrode angeordnet ist.

**8.** Verfahren zur Fertigung einer nichtwässrigen Sekundärbatterie, wobei das Verfahren umfasst:

Anordnen des Separators für eine nichtwässrige Sekundärbatterie nach einem der Ansprüche 1 bis 6 zwischen einer positiven Elektrode und einer negativen Elektrode, um einen geschichteten Körper zu produzieren;
Unterbringen des geschichteten Körpers im Inneren eines externen Materials, Injizieren einer Elektrolytlösung in das Innere des externen Materials, und dann Versiegeln des externen Materials, um ein Batterieelement zu produzieren; und
Unterziehen des Batterieelements Heißpressen bei einer Temperatur von 65 °C bis 75 °C, um den Separator für eine nichtwässrige Sekundärbatterie an die positive Elektrode, die negative Elektrode oder eine Kombination davon zu bonden.

## Revendications

**1.** Séparateur pour une batterie secondaire non aqueuse, comprenant :

un substrat poreux ; et
une couche poreuse adhésive qui est placée sur un côté ou sur les deux côtés du substrat poreux, et qui contient une résine de type poly(fluorure de vinylidène),
la résine de type poly(fluorure de vinylidène) contenant un copolymère A possédant un point de fusion allant de 130 °C à 148 °C ; le point de fusion étant mesuré selon le procédé décrit dans la description, et contenant, en tant que composants monomériques, du fluorure de vinylidène et un monomère représenté par la formule suivante (1) :

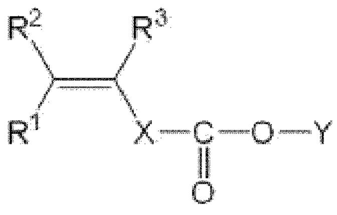

(1)

dans la formule (1), chacun parmi $R^1$, $R^2$ et $R^3$ représentant indépendamment un atome d'hydrogène, un atome d'halogène, un groupe carboxyle ou un dérivé correspondant, ou un groupe $C_{1-5}$ alkyle ; X représentant une simple liaison, un groupe $C_{1-5}$ alkylène ou un groupe $C_{1-5}$ alkylène substitué ; et Y représentant un atome

d'hydrogène, un groupe $C_{1-5}$ alkyle, ou un groupe $C_{1-5}$ alkyle qui contient au moins un groupe hydroxy.

**2.** Séparateur pour une batterie secondaire non aqueuse selon la revendication 1, le copolymère A possédant un poids moléculaire moyen en poids allant de 300 000 à 3 000 000 ; le poids moléculaire moyen en poids étant mesuré selon le procédé décrit dans la description.

**3.** Séparateur pour une batterie secondaire non aqueuse selon la revendication 1, le copolymère A possédant un poids moléculaire moyen en poids inférieur à 300 000 ; le poids moléculaire moyen en poids étant mesuré selon le procédé décrit dans la description ;

la résine de type poly(fluorure de vinylidène) comprenant en outre une résine B de type poly(fluorure de vinylidène) qui est différente du copolymère A et possède un poids moléculaire moyen en poids de 300 000 ou plus ; le poids moléculaire moyen en poids étant mesuré selon le procédé décrit dans la description et
un point milieu entre un point de fusion du copolymère A et un point de fusion de la résine B de type poly(fluorure de vinylidène) étant de 155 °C ou moins ; le point de fusion étant mesuré selon le procédé décrit dans la description.

**4.** Séparateur pour une batterie secondaire non aqueuse selon l'une quelconque des revendications 1 à 3, la couche poreuse adhésive comprenant en outre une charge inorganique.

**5.** Séparateur pour une batterie secondaire non aqueuse selon l'une quelconque des revendications 1 à 4, le copolymère A comprenant, en tant que composant monomérique, 0,5 % en moles ou plus du monomère représenté par la formule (1).

**6.** Séparateur pour une batterie secondaire non aqueuse selon l'une quelconque des revendications 1 à 5, le copolymère A comprenant en outre de l'hexafluoropropylène en tant que composant monomérique.

**7.** Batterie secondaire non aqueuse qui obtient une force électromotrice par dopage et dédopage de lithium, la batterie comprenant :

une électrode positive ;
une électrode négative ; et
le séparateur pour une batterie secondaire non aqueuse selon l'une quelconque des revendications 1 à 6, le séparateur étant disposé entre l'électrode positive et l'électrode négative.

**8.** Procédé de fabrication d'une batterie secondaire non aqueuse, le procédé comprenant :

le dépôt, entre une électrode positive et une électrode négative, du séparateur pour une batterie secondaire non aqueuse selon l'une quelconque des revendications 1 à 6 pour produire un corps stratifié ;
le logement du corps stratifié à l'intérieur d'un matériau extérieur, l'injection d'une solution électrolytique dans un intérieur du matériau extérieur, et ensuite le scellement du matériau extérieur pour produire un élément de batterie ; et
la soumission de l'élément de batterie à un pressage à chaud à une température allant de 65 °C à 75 °C pour lier le séparateur pour une batterie secondaire non aqueuse à l'électrode positive, à l'électrode négative, ou à une combinaison correspondante.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5837437 B
- JP 5670811 B
- EP 3376562 A1
- WO 2016093146 A1
- US 2014120269 A1